Europäisches Patentamt

European Patent Office

Office européen des brevets

(11) Publication number: **0 626 656 A2**

# EUROPEAN PATENT APPLICATION

(21) Application number: **94303075.9**

(22) Date of filing: **28.04.94**

(51) Int. Cl.⁵: **G06F 15/70**

(30) Priority: **28.05.93 GB 9311093**

(43) Date of publication of application:
**30.11.94 Bulletin 94/48**

(84) Designated Contracting States:
**AT BE CH DE DK ES FR GB GR IE IT LI LU MC NL PT SE**

(71) Applicant: **SOUTH BIRMINGHAM DISTRICT HEALTH AUTHORITY**
**27 Highfield Road**
**Edgbaston, Birmingham (GB)**

(72) Inventor: **Hill, Kevin**
**83 Waverley Crescent,**
**Romsley**
**Halesowen, West Midlands (GB)**

(74) Representative: **Harris, Ian Richard**
**c/o D. Young & Co.,**
**21 New Fetter Lane**
**London EC4A 1DA (GB)**

(54) **Image processing system and method for automatic feature extraction.**

(57) For extracting, from a source image, irregular relatively distinct features from an irregular relatively less distinct object which occupies a part of the source image, a number of image processing steps are performed in which: the edge outline of the object is extracted from the source image to produce an object outline image; the object outline is traced and predetermined data points on the object outline are located; particular regions of the object are identified within the source image using the identified data points; and the relatively distinct features are extracted from the identified regions. The invention finds particular application for the assessment of skeletal maturity ('bone age') wherein the source image is, or is derived from a digital or digitised radiograph of a subject's hand and wrist, with the object being the hand and wrist and the feature being the bones within the hand and/or wrist. In this case, classification of bone outlines extracted from the image are compared to and classified with respect to reference sample bones to compute an assessment of skeletal maturity.

FIG. 5

The invention relates to an image processing system and method for automatic feature extraction.

The invention finds particular application in the identification of skeletal maturity from radiographs. The determination of skeletal maturity ("bone age") plays an important role in paediatrics. The skeletal maturity, once determined, can be useful in the diagnosis of endocrinological problems and growth disorders. It is frequently used in connection with the application of growth hormones for the treatment of growth disorders to monitor the patients progress.

A standard technique for the assessment of skeletal maturity and for predicting of adult height, along with drawings representing bone samples at various stages in development is set out, for example, in the book entitled "Assessment of Skeletal Maturity and Prediction of Adult Height (TW2 Method)", by Tanner, et al, the second edition of which was published in 1983 by Academic Press, Harcourt Brace Jovanovich, Publishers.

The process of determining skeletal maturity has traditionally been a labour intensive process requiring the involvement of skilled personnel to compare radiograph images to drawings of samples of bones in the hand at various stages of development. It involves identifying individual bones of interest, comparing them to drawings of the standard reference samples, allocating point classifications according to closest matches with the reference samples, determining weighted maturity scores and then comparing the results to a percentile chart. Different charts a required for male and female subjects. As well as being labour intensive, the traditional manual techniques do not give very repeatable results.

It would be desirable to at least partially automate the process of determining skeletal age in order to reduce the human involvement and, hopefully, to improve the accuracy of the final determination.

It has been proposed to assist a technician to match a given bone to a given standard sample by storing representations of the standard samples in a computer memory, displaying a number of samples to the technician and enabling the technician to select the standard sample most closely related to the particular bone of interest. However, this proposed technique still requires the technician to correctly identify the bone of interest from the radiograph of the hand and wrist of the subject and to then make the comparison of the selected bone to the standard samples presented to him/her.

It would be desirable to be able automatically to identify and extract for comparison selected bone shapes from the original radiographs and to compare the extracted bone shapes to the references. However, the identification of the bone shapes from the radiographs is a very difficult task. In the first place, every radiograph of a hand is different because each hand to be radiographed will have individual characteristics, and be positioned at least slightly differently on the radiograph. For example, the degree of spread of the fingers on the hand will vary from radiograph to radiograph.

Moreover, although the bones of the hand will tend to show up as being relatively more distinct (i.e. relatively brighter on the radiograph) than the soft tissue of the hand (which will be relatively darker, that is nearer to the grey scale level of the background), it cannot be assumed that there will be a clear step in brightness level, between the pixels of the bones and the pixels of the rest of the image so that simple thresholding techniques cannot reliably be employed to extract the pixels relating to the bones from the rest of the pixels of the image.

Also, automatic comparison of the individual bone images to reference bone images is only practical if the identity of the individual bones can be determined.

To date the above has presented insurmountable technical problems to the fully automatic assessment of skeletal maturity.

An object of the present invention is, therefore, to facilitate the task of determining skeletal maturity from a radiograph of a part of a limb of a subject by enabling automatic feature extraction.

More generally, an object of the invention is to enable the extraction, from a source image comprising an array of pixels, irregular relatively distinct features from an irregular relatively less distinct object which occupies a part of the source image.

In accordance with a first aspect of the invention, there is provided an image processing system for extracting, from a source image comprising an array of pixels, irregular relatively distinct features from an irregular relatively less distinct object which occupies a part of the source image, the system comprising:
- object outline extracting means for extracting the edge outline of the object in the source image to produce an object outline image;
- data point locating means for tracing the extracted object outline and for locating predetermined data points on the object outline;
- region identification means responsive to the located data points to identify particular regions of the object within the source image; and
- feature identification means responsive to image data relating to the source image within the identified regions for extracting the relatively distinct features therefrom.

The image processing apparatus in accordance with the invention is able automatically to extract irregular features from an irregular object within an image, even where the differentiation in grey scale levels between the object and the features within that object are not clear and consistent and even where the shape of the features to be extracted is not known accurately.

Preferably, the object outline extracting means comprises object outline emphasising means including a difference function generator for replacing each pixel value in the image by a pixel value determined as a function of the difference in grey scale of pixels in a predetermined area centred on the pixel in question to produce an outline emphasised image, and thresholding means for extracting, as the object outline, pixels from the outline emphasised image which exceed a predetermined threshold.

For eliminating artifacts from the object outline image, parts of an outline where the difference between a perimeter of the part exceeds the distance between its extremities by an amount outside a predetermined range are deleted.

The use of the difference function generator enables the outline of the object to be emphasised, facilitating the extraction of outline using thresholding means.

It has been found that the reliability of the thresholding process can be greatly enhanced where the thresholding means recursively determines a threshold on the basis of a cumulative distribution of grey scale levels in the outline emphasised image until a continuous outline has been extracted.

Preferably, the object outline emphasising means also comprises a filter (e.g. a mean filter) for reducing the noise in the source image before processing by the difference function generator, Although the use of a smoothing filter such as a mean has the effect of blurring the image of the object, it has been recognised that this can be used to advantage to facilitate the identification of the edge of the object in that detail within the object becomes blurred and more uniform, emphasising the transition between the edge of the object and the background.

Preferably, the data point locating means comprises means for determining the orientation of the object within the image and initial data points by identifying predetermined object structures within the image, and means for selecting further data points corresponding to predetermined directions or changes in direction of the object outline. The determination of predetermined initial data points and then the determination of further data points where the outline extends in a particular direction or changes in direction enables significant points in the shape of an object, the shape of which is known generally but not exactly (e.g. for a hand), to be readily determined automatically.

To facilitate further processing, where the features to be identified lie in predetermined general regions of the object with respect to the data points, the region identification means preferably comprises sub-image defining means responsive to the data point locating means to define a sub-image identified by respective data points by extracting pixels from or derived from the source image and, where necessary, rotating the pixels to correspond to a predetermined sub-image orientation, and wherein the feature identification means identifies the outlines of individual features within a sub-image.

The feature identification means preferably comprises means for emphasising the feature outlines and means for following the feature outlines to encode the shape of the outlines. By encoding the shape of outlines in this way, automatic comparison of the shapes of the identified features to reference features can be performed,

Accordingly, therefore, the system preferably also comprises feature classifying means which compares the features identified by the feature identification means to predetermined reference features to classify the identified features and report generating means for outputting a report on the result of the classification of predetermined identified features from the source image.

The invention finds particular, but not exclusive application to the automatic extraction of bone outlines where, for example, the source image is, or is derived from a digital radiographic image of a part of a limb of a subject. Here the object can be part of a limb (e.g. the hand, wrist and part of the forearm) of a subject.

Where the source image is a radiograph including a hand, the data point locating means preferably comprises means for tracing fields, e.g. circles, of differing sizes, e.g. diameters, on the object outline image and for determining data points representative of the wrist or forearm, as start and finish points for subsequently tracing the object outline, in response to the detection of a predetermined pixel value pattern or patterns.

In order to perform an assessment of the skeletal maturity of a subject, from a radiograph, it is necessary to compare the bone images extracted from the image of the hand to reference bone images. As the bone shapes are inverted between left and right hands, it is desirable automatically to be able to determine the handedness of the bone images. This is achieved by providing means in the feature identification means, for assessing the relative widths of the relatively distinct areas (corresponding to the radius and ulna) in the wrist portion of source image, or of an image derived therefrom, to determine the handedness of the image, and, where necessary, to invert the pixels of the sub-images to correspond to a hand of a particular handedness. Thus, not only can the handedness be determined, but the bone images for a particular handedness can be simulated, if required, by image inversion.

Thus the invention finds particular, but not exclusive application for the automatic computation from radiograph images of reports assessing skeletal maturity. Such reports can then be used in subsequent diagnosis of growth defects and other such conditions.

One possible source of error in the assessment of skeletal maturity is that it may be that a radius that has achieved 100% maturity, where the epiphysis has completely fused with the radial metaphysis, such that there is no visible join. Such a radius may be difficult to distinguish by shape recognition alone from a radius whose epiphyseal centre has not yet ossified. This is not a problem with the ulna, because the distal edge of its epiphysis has a distinctive shape. In order that the system is able automatically to distinguish between these cases, rough age assessment means are preferably provided for scanning pixels within an identified image region to identify predetermined pixel value changes indicative of immature bone development whereby a rough age assessment is computed for distinguishing different cases relevant to the generation of the report on skeletal maturity.

In order to optimise the grey scale resolution of the source image 15, the system preferably comprises means for generating the source image from an initial image by adjusting the spread of pixel values of the initial image to utilise substantially the full range of pixel values available for the source image.

In accordance with another aspect of the invention, there is provided a method for processing an image to extract, from a source image comprising an array of pixels, irregular relatively distinct features from an irregular relatively less distinct object which occupies a part of the source image, the method comprising:

a) extracting an edge outline of the object in the source image to produce an object outline image;

b) tracing the extracted object outline and locating predetermined data points on the object outline;

c) responding to the located data points to identify particular regions of the object within the source image; and

d) responding to image data relating to the source image within the identified regions for extracting the relatively distinct features therefrom.

Preferably method step (a) comprises:

a)(i) replacing each pixel value in the image by a pixel value determined as a function of the difference in grey scale of pixels in a predetermined area centred on the pixel in question to produce an outline emphasised image; and

a) (ii) extracting, as the object outline, pixels from the outline emphasised image which exceed a predetermined threshold.

Preferably method step (a) (ii) comprises determining the threshold recursively on the basis of a cumulative distribution of grey scale levels in the outline emphasised image until a continuous outline has been extracted.

Preferably method step (a) additionally comprises a step (a)(0) of filtering noise in the source image before applying the difference function.

Preferably method step (b) comprises:

b)(i) determining the orientation of the object and initial data points within the image by identifying predetermined object structures within the image; and

b) (ii) selecting further data points corresponding to predetermined direction or changes of direction of the object outline.

Preferably method step (a) comprises removing pixels from an outline image forming part of the object outline, which part has a perimeter greater than the distance between its extremities by an amount outside a predetermined range.

Preferably method step (c) comprises responding to the data points identified in step (b) to define a sub-image identified by respective data points by extracting pixels from or derived from the source image and, where necessary, rotating the pixels to correspond to a predetermined sub-image orientation, and wherein step (d) comprises identifying the outlines of individual relatively distinct features within the sub-image.

Preferably method step (d) comprises:

d)(i) emphasising the feature outlines; and

d)(ii) following the feature outlines to encode the shape of the outlines.

Preferably the method additionally comprises a step of:

e) comparing the features identified by the feature identification means to predetermined reference features to classify the identified features and generating an output report on the result of the classification of predetermined identified features from the source image.

Preferably the source image of the method is, or is derived from a digital radiographic image of a part of a limb of a subject wherein the object is part of the limb and the features are the bones within the limb.

Preferably the part of a limb includes a hand of a subject.

Preferably method step (b)(i) comprises tracing fields e.g. circles, of differing sizes, e.g. diameters on the object outline image and determining data points representative of the wrist or forearm, as start and finish points for subsequently tracing the object outline, in response to the detection of a predetermined pixel value pattern or patterns.

Preferably method step (d) comprises:

d)(0) assessing the relative widths of relatively distinct areas in the wrist portion of source image, or of an image derived therefrom, to determine the handedness of the image, and, where necessary, to invert the pixels of the sub-images to correspond to a hand of a particular handedness.

Preferably the report generated is an assessment of skeletal maturity.

Preferably method step (e) comprises:

e) (i) scanning pixels within an identified image region to identify predetermined pixel value changes indicative of immature bone development whereby a rough age assessment is computed for distinguishing different cases relevant to the generation of the report on skeletal maturity.

Preferably the method comprises an initial step of generating the source image from an initial image by adjusting the spread of pixel values of the initial image to utilise substantially the full range of pixel values available for the source image.

Although reference is made herein to the part of the limb comprising the hand, this term is used for reasons of conciseness. In fact the radiograph images used in the preferred example of the invention include the end of an upper limb from the lower forearm just above the wrist to the end of the limb. Accordingly, where reference is made to a 'hand' in this document, it is to be understood that, depending on the context, this term can be used to comprise the end of an upper limb from the lower forearm to the end of the fingers.

The invention will be described by way of example hereinafter with reference to the accompanying drawings in which:

Figure 1A is a schematic diagram of a computer workstation which can be used for implementing one example of an image processing system in accordance with the invention;

Figure 1B is a schematic block diagram of hardware elements of the workstation of Figure 1A;

Figure 2 is a block diagram of functional elements an embodiment of the invention;

Figure 3 is a diagram for illustrating a process for frame removal;

Figure 4 is a grey level histogram diagram;

Figure 5 is a flow diagram of functional steps of a bone outline extractor;

Figure 6 is a diagram for explaining a difference generator function;

Figure 7 is a variance histogram diagram;

Figure 7A illustrates the removal of unwanted artifacts on an outline image;

Figure 8 is a diagram representing a smoothed hand outline for explaining data point identification;

Figure 9 is a diagram representing the computation of a search rectangle;

Figure 10 is a diagram representing the rotation of a subimage for a search rectangle;

Figure 11 is a grey scale histogram representative of a cross section of the wrist portion of Figure 8;

Figure 12 represents two plots of grey level along the third finger of a hand;

Figure 13 is a representation of an array of pixel values for fuzzy processing;

Figure 14 represents a linear index of fuzziness of an unequalised finger section;

Figure 15 represents a graph of a $G_s$ function against grey level;

Figure 16 represents a graph a $G_\pi$ function;

Figure 17 is a representation of the result of the fuzzy outline extraction on a finger of about 5 years;

Figure 18 represents the result of a "max" edge detection on the finger of Figure 17;

Figure 19 represents the generation of an octal code for outline tracing; and

Figure 20 represents an example of a report on skeletal maturity.

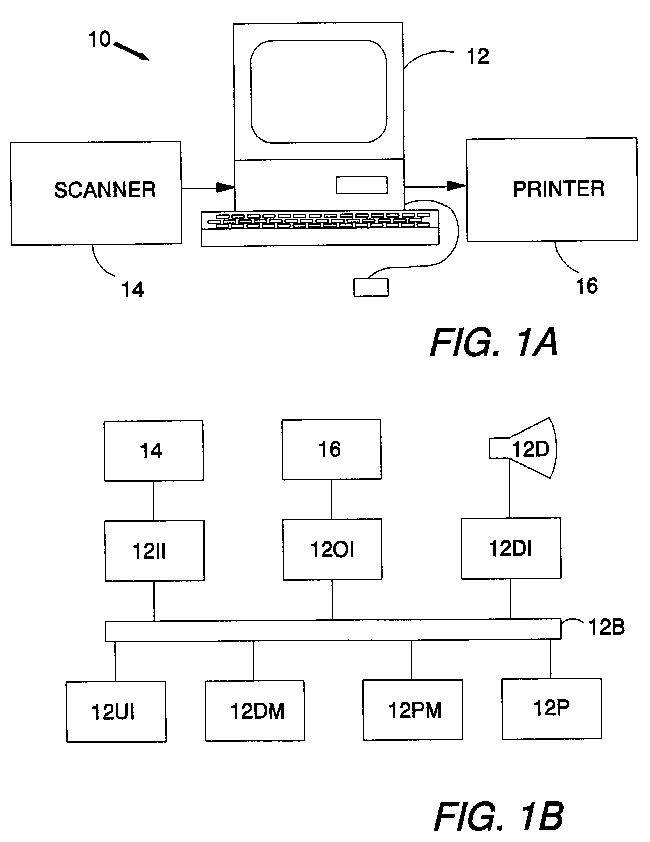

Figure 1A is a schematic diagram of a computer workstation which can be used for implementing one example of an image processing system in accordance with the invention. The computer workstation comprises a conventional high performance desk top computer 12 including a display unit, system unit and conventional user input devices such as a keyboard and a mouse, and in addition a digital scanner 14 for scanning X-ray pictures and a printer 16 for printing reports.

Figure 1B is a diagram of a possible system structure for the workstation of Figure 1A. A processor 12P, program memory 12PM, data memory 12DM, user interface means 12UI, input interface 12II, output interface 1201 and display interface 12DI are all interconnected via a bus 12B. The data and program memories 12DM and 12PM can be combined in common hardware elements using a combination of technologies such as RAM, ROM, disk drives etc, as appropriate. The input interface 12II and the output interface 12OI can be used to interface the scanner 14 and the printer 16, respectively. The display interface is used to interface a display device 12D.

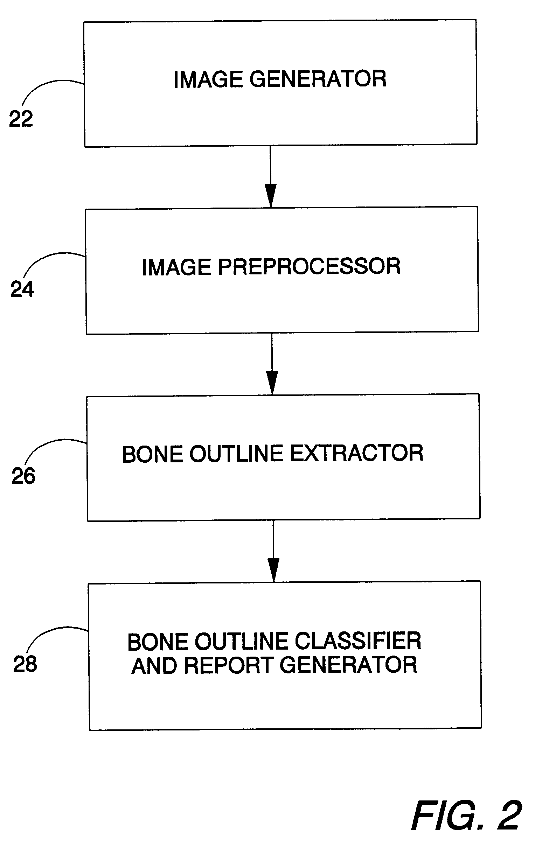

It will be appreciated from the following description that the arrangement illustrated in Figures 1A and 1B is merely illustrative of possible hardware configurations for an embodiment of the invention. The functions described in the following are preferably implemented on the hardware by suitably programming the computer 12. The programs can be stored in the program memory 12PM and the data, including various images initially input and subsequently created during image processing, can be stored in the data memory 12DM. Figure 2 is a schematic block diagram giving an overview of functional elements of an embodiment of the present invention for estimating skeletal maturity ('bone age').

The system illustrated in Figure 2 comprises an image generator 22. This can take the form of a digital scanner such as the digital scanner 14 illustrated in Figure 1. However, in alternative embodiments of the invention it could be implemented, for example, by means of a digital X-ray machine. Alternatively, the image generator could be implemented in the form of a storage medium (e.g. a digital memory) on or in which previously captured images are stored.

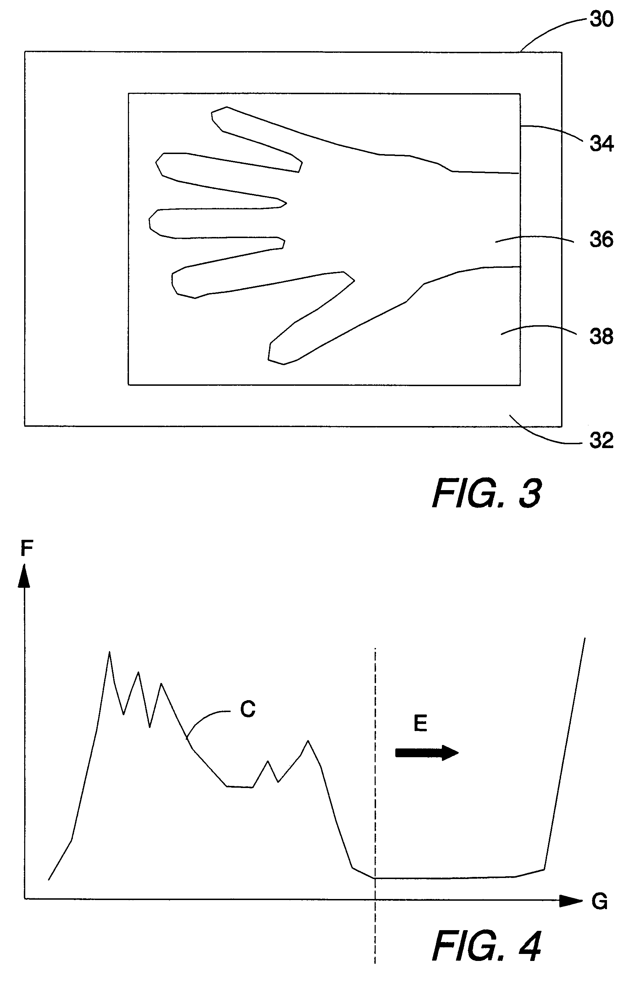

Means 24 for pre-processing of the image data generated by the image generator 22 can be connected thereto to perform image preprocessing, for example as will be described later with reference to Figures 3 and 4, should this be necessary. If the image generator provides image data which does not need pre-processing, then the image pre-processor is not required. The image pre-processor can be implemented by suitably programming the computer 12.

A bone outline extractor 26 is used automatically to extract bone outlines from the image data supplied from the image generator possibly pre-processed by the image pre-processor as necessary. The bone outline extractor will be described hereinafter. The bone outline extractor can also be implemented by suitably programming the computer 12.

Once the bone outlines have been extracted from the image data, then they can be classified and a report on the skeletal maturity can be generated by means of the bone outline classifier and report generator 28. These functions can also be implemented by suitably programming the computer 12. The report can be generated on the display screen of the computer 12 and/or printed on the printer 16. The various functional elements illustrated in Figure 2 can be implemented by means of a hardware configuration as illustrated in Figure 1.

INPUT

A preferred example of the invention will now be described in more detail. In this particular example, a radiograph is digitised using a Howtek ScanMaster 3+ transparency scanner. Working resolution ranges from 75 to 300 dots per inch (dpi). The computer used is an Apple Macintosh Apple Quadra 950 with 64 MB RAM. At 100 - 200 dpi scanner resolution, the time taken to generate a report on skeletal maturity varies from five to twelve minutes, depending on resolution selected and the quality of the radiograph. This time includes about three minutes for the scan. With the present hardware configuration, higher resolutions than 300 dpi have proved to be impractical because the time taken to generate a report. However, it has been found that 200 dpi gives satisfactory results. If higher performance or special purpose hardware were employed, then 300 dpi could become practical, but it would not give significantly better accuracy overall.

If the user is permitted to position the radiograph anywhere on the scanner's A3 plate, the system is preferably arranged to scan the radiograph twice: once at low resolution to find the radiograph; and once at high resolution. However, this process is time consuming, so that, before scanning, the system gives the user the option of placing the radiograph on the A4 part of the plate first scanned by the scanner, whereby the radiograph need only be scanned once.

The scanned image is then stored in the memory of the computer 12.

IMAGE PRE-PROCESSING

Frame Removal

Since it is possible for the input image 30 to contain border areas 32 corresponding to empty plate (represented by very bright pixels), the empty regions are removed as this eases further recognition of the image. The system assumes that the radiograph is positioned with its edges parallel to the scanner plate and searches from each of the four edges of the digitised radiograph image for a vertical or horizontal line of pixels which contains a sufficient proportion of pixel values lower than half the maximum grey level. The image pixels within the area defined by the four lines of pixels determined in this way form the smaller image 34 containing the hand and wrist 36 and the background 38 surrounding the hand and wrist.

If the radiograph is not aligned with its edges parallel to the scanner plate, the result is that some of the radiograph image will be lost and some of the white border areas 32 will be included in the image. In most cases this will not be critical. However, the system is preferably arranged to display on its display screen the reduced image so generated, so that the operator could adjust the orientation of the radiograph and restart the scan if the original orientation was unsatisfactory.

After removing the surrounding frame, further pre-processing can be performed to reduce the amount of processing to be performed. Since the area of the hand outline constitutes a large proportion of the area of the image left after frame removal, it is feasible to reduce the resolution of the image considerably. Experimentation with a large number of radiographs has revealed that the area of the image should not be reduced below approximately 150 000 pixels because the hand outline extracted would then not contain enough information to be useful after extraction. However, a copy of the original image is retained for later processing.

Digitised radiographs take up a very small fraction of the range of grey scales available. To make it easier reliably to extract meaningful segments of image, the image data for the hand and wrist is made to take up the whole of the range of available grey levels. This process is called 'Equalisation'. There are several ways of doing this, an example of which termed 'Histogram Equalisation' is described in the book by Gonzalez R. C. and Wintz, P (1977) entitled 'Digital Image Processing' and published by Addison-Wesley, Reading, Massachusetts, US.

Histogram Equalisation

There follows a brief description of the histogram equalisation technique, with reference to Figure 4, which has the effect of expanding a range of the grey scale values in the image to completely occupy the full range of digital values available. In Figure 4, the horizontal axis G represents the grey scale values and the vertical axis F represents the relative frequency of occurrence of grey scale values in a sample image. Thus the curve C represents a histogram of the grey scale frequencies. The object of the histogram equalisation is to expand the grey scale values to the left of the dashed line in the direction indicated by the arrow E so as to completely occupy the available range of digital values.

Let $g_i$ be the value of the $i_{th}$ grey level, $0 \leq i \leq L$, and let $h_i$ be the number of times $g_i$ appears in the image X of width M and height N pixels and L grey levels. The probability of $g_i$ appearing in the image is

$$P(g_i) = \frac{h_i}{MN}$$

We can produce a mapping function $g'_i = f(g_i)$ where $g'_i$ is the new grey level that $g_i$ is to become, that equals the cumulative distribution of $g_i$:

$$g'_i = (L-1) \sum_j \left( \frac{h_j}{MN} \right) \Big| j = 0 \ldots i$$

In the new image, produced by applying this function, which image we will refer to hereinafter as the source image on which future processing is based, the dynamic range of the image is increased to cover the range available i.e. 0...L-1. This new image is then stored separately It has the added advantage that the dynamic range of the image can be standardised, which means that the background of the image will occupy approximately the same range of grey levels for all radiographs.

The image produced by this process contains a great deal of random noise, which could interfere with attempts to isolate the hand and ultimately to extract the bone outlines therefrom. As will be described below, the noise can be reduced by a noise reduction filter.

7

BONE OUTLINE EXTRACTION

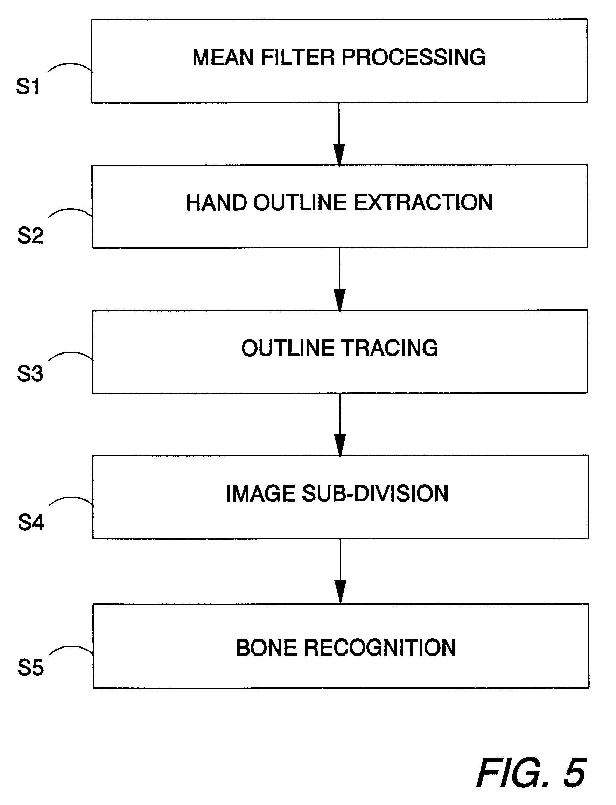

Figure 5 is a schematic overview of the steps employed in the present example of the invention for extracting the bone outlines from the pre-processed input image. The individual steps of the process are described below.

Step 1 - Mean Filter

In step S1, a mean filter is applied to the image generated as a result of the histogram equalisation process. The mean filter is extremely good at removing noise from an image, but has the side effect of blurring the image very badly. Given any pixel in the image $x_{mn}$, the corresponding filtered pixel $x'_{mn}$ using a mean filter of radius r pixels is given by:

$$x'_{nm} = \frac{\sum\limits_{i=-r}^{r} \sum\limits_{j=-r}^{r} x_{(n+i)(m+j)}}{(2r+1)^2 - 1} \;\Big|\; i,j \neq 0, r > 0, r < n < N - r, r < m < M - r$$

which in plain language means: "add up the brightness of the pixel's neighbours and divide by the number of neighbours, and make this pixel that brightness value". A neighbour is defined as a pixel in a square of side twice r plus one pixels whose centre is the pixel being considered, but not including that pixel. The value for r is usually one. This filter gives an output image of N - 2r by M - 2r pixels, unless pixels on the edges are handled in a special way, say by calculating the mean of the available neighbours and ignoring the ones outside the bounds of the image.

The image is filtered several times using the above filter using a radius of one pixel. The result is a filtered image of the hand and wrist with highly blurred bones, and a more easily extractable ramp edge at the hand outline. This filtered image is also separately stored in the computer memory.

Step 2 - Hand Outline Extraction

The next step in the process, step S2, is the extraction of the hand outline.

The smoothed image still contains some edges of the more prominent bones, for example the ulna and radius. However, the amount of change in grey level across the edges of these bones is considerably smaller than across the hand outline. Thus the hand outline can be extracted by applying a transform to the image which replaces each pixel value with a function of the difference in grey scale of pixels in a specified area centred upon the pixel in question. After experimentation, a variance transform is used for this purpose, although other equivalent techniques could be used. This replaces each pixel with the computed variance of the pixels within a radius of one pixel. That is:

$$x_{Variance} = \frac{\sum (x - \overline{x})^2}{n}$$

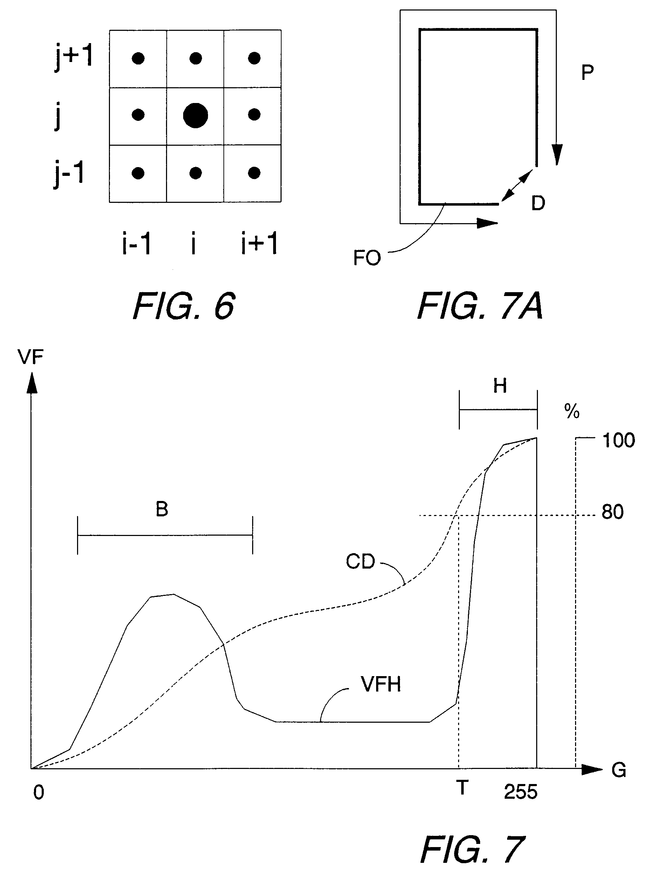

This is also represented in Figure 6, where for a given pixel i,j, the variance value is computed from that pixel and the surrounding eight pixels. This means that the sample size is always the same (i.e. nine), so the final division for the variance calculations can be ignored, enabling the process to work using only integer arithmetic. Sometimes the variance exceeds the maximum grey scale value possible, in which case it is clamped to the maximum grey value.

If a histogram is made of the output outline edge of the variance transform (a new image, which we shall term the enhanced image, containing measures of spread of grey level rather than grey levels), the result is a graph with a shape corresponding generally to that illustrated schematically by the curve VFH in Figure 7. In Figure 7 the left hand vertical axis represents the variance frequency VF and the horizontal axis represents the range of grey scale values G. The part bracketed B represents the area of the bone outlines and the areas bracketed H represents the area of the hand outlines.

The hand outline can now be extracted by thresholding at a high value, say three-quarters of the maximum grey level. However, it has been found that simple thresholding at a predetermined value is only reliable with good original radiographs. It has been found that more consistent results, even with poor radiographs, can be obtained if the threshold level is computed on the basis of the cumulative distribution of grey levels in the above histogram. Starting from zero, the number of times a particular grey level appears in the image is accumulated until the total exceeds an appropriate percentile. This is represented by the short-dashed curve CD on Figure 7. The grey level at which the percentile is exceeded is then taken as the level T for thresholding. The system starts at percentile 80, as represented on the right-hand short-dashed axis in Figure 7. If an unbroken hand outline is not obtained, the system gradually reduces the threshold value to percentile 70, below which it gives up because of increasing edge noise. Good radiographs will work at the first or second iteration, while lower quality ones will require more iterations. The resulting hand outline is stored as an outline image in the computer memory for subsequent processing. Alternatively, it could be stored as a series of coordinate points, or series of vectors, etc.

Step S3 - Outline Tracing

The hand outline image stored in the computer memory is in the form of an image containing black pixels where there was no edge and white pixels where hand outline (and other sufficiently strong outlines such as capital "L"'s or a ruler scale on the radiograph) was detected.

Once the hand outline has been stored, the next process of outline tracing (step S3 in Figure 5) can then be performed. The first stage in tracing the outline tracing is to find the ends of the outline of the hand. This is achieved in the following manner.

A circle is traced around the centre of the outline image at a radius R, which starts at half the largest dimension of the image (height or width) and reduces successively. During the tracing of each concentric circle, the whiteness of the pixel on the circular path is recorded in a string of characters i.e. "BBBBBBBWWWWWWWBBBBB" where "B" means black, and "W" means white, The path traced each time is not the perimeter of the circle, but one and a quarter times the perimeter, since it is possible to have the points on both sides of the wrist straddle the starting point. Each string is run length encoded (transformed from, say, "BBBWWWBBBBB" to "three blacks, three whites, five blacks") and searched for a pattern which has been predetermined to correspond to a wrist i.e. "black-white-black-white-black" with appropriate attached numbers of characters. The coordinates of where this pattern appears (the co-ordinates of the first white pixel on one side of the wrist, and the co-ordinates of the last white pixel on the other side) are recorded in a set of stacks in computer memory, as defined by the following process:

9

```
Initialise a set of stacks of co-ordinates to all being empty
FOR all wrist patterns found DO
        Find the stack whose top co-ordinates are nearest to the co-
        ordinates of this wrist pattern
        IF the co-ordinates of this wrist pattern is close enough to the
        top of this stack
        THEN
                add the co-ordinates of this wrist pattern to this stack
        ELSE
                IF there is an empty stack
                THEN
                        add the co-ordinates of this pattern to this stack
                ELSE
                        delete the smallest stack
                        add the co-ordinates of this pattern to the newly
                        empty stack
                END 1F
        END IF
```

The result of the above process, which can be implemented by means of software, or by special purpose hardware, is that the largest stack, after the circle has reduced to nothing, is the stack whose top contains the primary co-ordinates of the wrist.

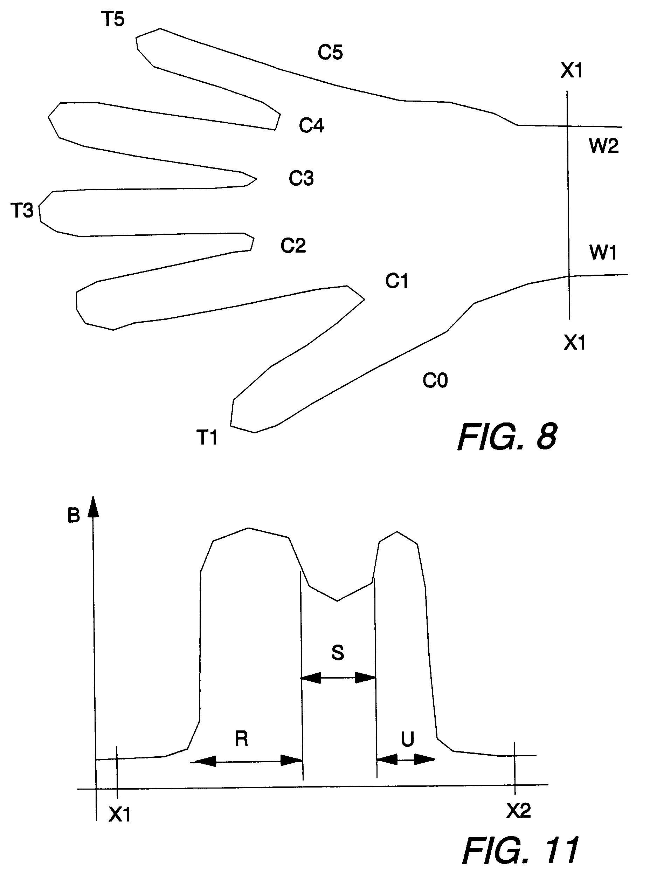

Once the coordinates of the wrist have been determined (points W1 and W2 in Figure 8) there is then a start point W1 and a finish point W2 for the hand outline. The outline is traced using a standard edge follower into a data structure that can contain it, The edge follower determines if the outline finishes correctly (started at the start point, and finished at the finish point). If it does not, a then the process reverts to step S2 and a lower threshold is used for the hand outline extraction process.

The logical operation of the edge follower can be represented by the following process:

```
Initialise a stack of co-ordinates to be empty.
Put the start point on the stack
WHILE the stack is not empty DO
        get a point off the stack
        IF the point equals the finish point THEN STOP
        IF the point is the start point THEN STOP
        mark the point as followed
        FOR all four-connected neighbours of this point DO
                IF this point is followable (if it has a neighbour
                of a different colour)
                THEN
                        put the point on the stack
                END IF
        END FOR
END WHILE
```

When analyzing different radiographs, it has been observed that if some object on a radiograph comes close to the outline of the hand, the outline tracer described above may trace out the foreign object and interpret it as part of the outline. From experience, by close is meant a distance of the order of 1.5 cm, depending on the dynamic range of, and quality of noise in, the radiograph. The tracking of foreign objects which are interpreted as part of the outline of the hand, can cause problems in the process of image subdivision (step S4) to be described below. For example, if a radiograph label were located close to the tip of one of the fingers of the hand outline shown in Figure 8, it could be that the outline of this label would be traced as part of the hand. To deal with this situation, a technique has been developed which scans along the outline that was traced and removes any part of that outline which has a perimeter P appreciably greater than the cartesian distance D between its extremities. Figure 7A illustrates a situation where a foreign outline FO has a perimeter P significantly greater than the cartesian distance D between its extremities. The technique is described by means of the following Pseudo-code:

Let S and F be the start and finish points of any section of the traced hand outline.
Set S to the start of the traced hand outline
Set F to a minimum distance down the outline from S. If this is not possible because the minimum distance is greater than the amount of outline left, set F to the end of the outline.

```
WHILE F is not at the end of the outline DO
        WHILE F is not at the end of the outline DO
                IF the number of pixels between S and F, divided by
                the cartesian distance between S and F, is not within a
                certain range
                THEN
                        remove pixels between, but not including, S and F.
                        Set F to a minimum distance down the outline from S.
                        If this is not possible because the minimum distance
                        is greater than the amount of outline left, set F to
                        the end of the outline.
                ELSE
                        IF F is not at the end of the outline
                        THEN
                                step F along the outline
                        END IF
                END IF
        END WHILE
END WHILE
STOP
```

Because the radiograph is reduced/expanded to a standard image size (number of pixels), it is possible to say that a feature on the outline which it is intended to keep (a finger or a thumb) has a perimeter to an extremity distance ration between certain extreme values. Thus, any other feature can be removed by the technique described immediately above.

Step S4 - Image Subdivision

This example of the invention uses a technique of sub-dividing the image of the hand into smaller search rectangles to facilitate bone recognition (step S4 in Figure 5).

The hand outline consists of a series of points, starting and ending at the wrist points previously found. To produce smaller search rectangles on which to perform bone recognition, the system identifies individual fingers on the outline of the hand. This is done by producing a new outline represented in Figure 8, from the outline previously generated. This new outline is filtered and contains fewer points, to remove spurious wiggles. By tracing along the outline from its ends and detecting predetermined large changes in direction and/or small changes in direction from the starting point, the fingertips (T1, T3 and T5 on Figure 8) and inter-digital clefts (C1, C2, C3 and C4 on Figure 8) can be identified.

In addition to the points W1, W2, T1, T3, T5 and C1, C2, C3 and C4, the system also computes two extra points C0 and C5 on the outside of the hand. These points are need for computing search rectangles for the first and fifth fingers. The points C0 and C5 are determined to be the points on the hand outline whose distances from the next adjacent inter-digital clefts are the smallest. They can be found by following the edge from W1 and W2 and searching for the shortest distance along the filtered outline from C1 and C4 respectively.

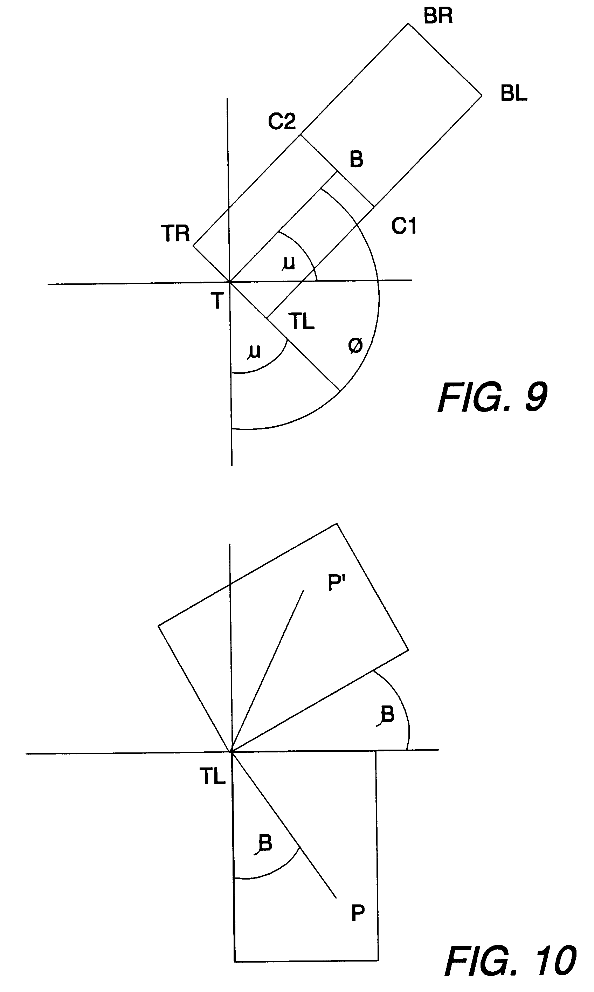

Once the data points have been determined, search rectangles for the fingers can be calculated as represented in Figure 9. For each rectangle, the centre is the point bisecting the cleft points on each side of the finger. The width w of each rectangle is the distance between the two points. The height h is twice the distance from the tip to the bisection point. Let $(x_T, y_T)$ be the co-ordinates of the fingertip, $(x_{c1}, y_{c1})$ and $(x_{c2}, y_{c2})$ the co-ordinates of the two clefts, and $(x_B, y_B)$ the co-ordinates of the bisection point,

Then

$$\mu = \tfrac{\pi}{2} \text{ for } y_b = y_T$$

otherwise

$$\mu = \arctan \frac{(x_b - x_T)}{(y_b - y_T)}$$

and the top left point $(x_{TL}, y_{TL})$ is

$$x_{TL} = \frac{w \sin \mu}{2} + x_T$$

$$y_{TL} = \frac{w \cos \mu}{2} + y_T$$

and the angle $\varnothing$ through which a rectangle of the same dimensions but in the desired orientation needs to rotate about T to assume the same orientation as this rectangle is

$$\varnothing = \left\lfloor \mu + \frac{\pi}{2} \right\rfloor$$

The search rectangle is now completely specified, but the other vertices, TR, BL and BR can be similarly found by simple trigonometry to make the rectangles easier to draw. The search rectangle enclosing the radius, ulna and carpal bones is calculated by the same method, except:

- C1, C2 and T are replaced by w1, w2 and the bisection point of BL and BR of the third finger search rectangle respectively;
- the height h is the distance between the bisection point of BL and BR, and the bisection point of w1 and w2.

Given the four search rectangles found above, they can now be rotated as represented in Figure 10 into their own smaller images to find and measure the bones of the hand and wrist.

To explain the process of image rotation, consider an arbitrary point P $(x_p, y_p)$ on the target image, which when rotated by an angle $\varnothing$ about its top left vertex TL becomes point P'$(x_{p'}, y_{p'})$. The radius of rotation r and the angle from vertical $\beta$ are found by Pythagoras' Theorem and simple trigonometry:

$$r = \sqrt{(x_p - x_{TL})^2 + (y_p - y_{TL})^2}$$
$$\beta = \tfrac{\pi}{2} \text{ for } y_p = y_{TL}$$

otherwise

$$\mu = \arctan \frac{(x_p - x_{TL})}{(y_p - y_{TL})}$$

The new point P' can then be calculated:

$$x_{p'} = r \sin(\beta)$$

$$Y_{p'} = rcos(\beta)$$

The point P' is in the co-ordinate system of the target image, and it needs to be in the system of the source image. Thus the difference between the centres of rotation of the source and target rectangles (the target centre of rotation is (0,0)) is added to translate between systems. This is done for all pixels in the target image.

The result of the above process is that three images containing the bones of the three so called "Tanner - Whitehouse fingers" (that is the thumb, the middle and little fingers used by Tanner et al in the work entitled 'A New System for Estimating Skeletal Maturity from the Hand and Wrist, with Standards Derived from a study of 2600 Healthy British Children', published in 1962 by the International Children's Centre, Paris) and one containing the ulna, radius and carpal bones are generated and are all oriented in a standard way, so it is known which way up the bones are. The radioulnar rectangle also contains the first metacarpal epiphysis, which appears "at the wrong end" of the first metacarpal and thus may not be in the first finger search rectangle. The four images are enhanced by histogram equalisation, and noise reduction by a median filter.

Before further processing is performed with regard to recognition of the bones of the hand and wrist, it is convenient at this point to determine whether the original image relates to a left or right hand. Tanner et al. in the aforementioned work specifies the use of the left hand. However, it is possible that either a left hand or a right hand radiograph might be used. Also, if a radiograph of a left hand is positioned on the scanner the wrong way up, it will appear to the system as a right hand, and vice versa. To find out the "handedness" of the hand being analyzed, the fact that the width of the radius is greater than the width of the ulna over the whole of their lengths down the forearm part of the image can be used.

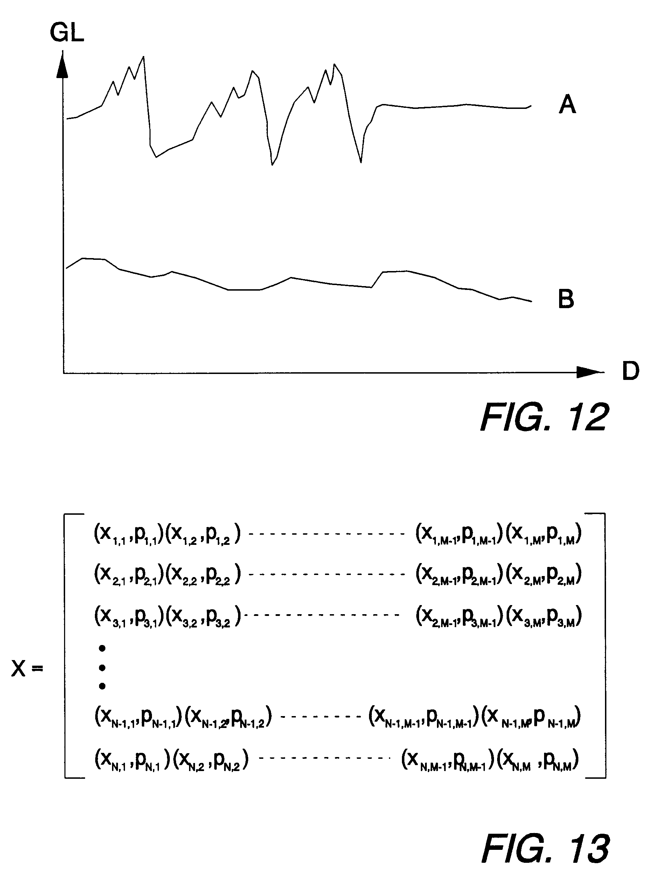

Figure 11 represents the brightness of the image on a cross-section X1-X2 of Figure 8 with the very marked change in grey level caused by the transition from soft tissue to bone and back again across the forearm. Thus it is easy to detect the points where the bones begin and end, from which the width of the bones in pixels can be determined at several vertical distances up the forearm. It will be observed that the forearm section depicted in Figure 11 is either a right hand or a left hand positioned erroneously, as the radius (the thicker bone) referenced R is on the left, the ulna referenced U being on the right with the soft tissue referenced S therebetween. If a right hand is detected, the search rectangles for the first and fifth fingers can be exchanged and all search images are reflected about an imaginary vertical line drawn down the middle of each image, giving what is effectively a left hand for further study.

If further work is done on the radius and ulna at this point, it may be that a radius that has achieved 100% maturity may be found whose epiphysis has completely fused with the radial metaphysis such that there is no visible join. Such a radius may be difficult to distinguish by shape recognition alone from a radius whose epiphyseal centre has not yet ossified. This is not a problem with the ulna, because the distal edge of its epiphysis has a distinctive shape. The system automatically distinguishes between these cases by plotting the grey level down the centre of the third finger and performing pattern recognition on this to decide whether the hand is fully or nearly fully mature, or it is very immature, or somewhere in-between. Pattern A in Figure 12 is a schematic representation of a typical pattern produced by a radiograph of a five year old boy who has achieved less than 40% maturity. Pattern B in Figure 12 is a schematic representation of a typical pattern produced by a radiograph of a sixteen year old girl who has achieved almost 100% maturity. The three pronounced troughs given in pattern A by the five year old correspond to the three comparatively large areas of soft tissue separating the distal, middle and proximal phalanges, and the third metacarpal respectively. Reading left to right, each trough is preceded by two or three peaks that represent the metaphyseal and epiphyseal centres of the phalanges. The mature girl presents an almost flat pattern between bones, indicating a lack of soft tissue between the phalanges and between epiphyses and metaphyses. In Figure 12 the vertical axis GL represents the grey scale level and the horizontal axis D represents the distance along the sub-image formed by the search rectangle in the finger.

By detecting these troughs, the system is able automatically to determine whether the hand is not mature enough to have a fully mature radius and can thus distinguish between class A (no epiphysis) and class I (no separate epiphysis) cases as will be understood by one skilled in the art.

Step S5 - Bone Recognition

After performing the image subdivision and the rough assessment of maturity, it is then possible to proceed to the next step S5 in the process illustrated in Figure 5, namely bone recognition.

In order to perform the standard thirteen bone RUS method of scoring for determining skeletal maturity, the epiphyses and metaphyses of the radius, ulna, metacarpals and phalanges have to be identified. In order to perform a seven bone Carpal scoring and a full twenty bone scoring, the seven Tanner-Whitehouse small wrist bones must also be found. In an article entitled 'On Edge detection of X-ray images using Fuzzy Set', by S. K. Pal et al., published in 1983 in IEEE Trans, Patt. Anal. and Machine Intell., PAMI-5, pp.69-77. a prior technique for extracting contours from radiographs using fuzzy set theory is described. In accordance with this prior technique, grey levels corresponding to transitions between meaningful areas on a radiograph are selected automatically using the indices of fuzziness and the entropy of the image measured at various grey levels. The outlines (bones, palmar and dorsal surfaces) of a radius are extracted by using a non-linear function operating on these threshold values.

To apply the techniques of fuzzy set theory to the processing of images, the sub-images representing the search rectangles must be extended to contain a second plane, called the property plane. This plane can be considered as a matrix of real numbers from 0.0 to 1.0, there being one of these for every pixel in the image. A value for a particular pixel represents the degree to which that pixel possesses some property or other - 0.0 indicates it does not possess the property at all, 1.0 means that it definitely possesses the property. Each pixel in the image X can therefore be defined as an ordered double, containing its grey level $x_{mn}$ and its property value $p_{mn}$. This is represented by the array of ordered doubles illustrated in Figure 13.

Image processing involving the property plane usually involves extracting some fuzzy property from the grey level (spatial) plane with a non-linear function of some sort of function f, changing the property plane in some way, and applying the inverse function $f^{-1}$ to retrieve the modified spatial plane. The functions suggested by Pal et al. require a set of threshold values that divide the image up into the available region. According to the article by S.K, Pal et al. entitled 'Automatic Grey Level Thresholding Through Index of Fuzziness and Entropy' published in 1983 in Patt. Recog. Lett., Vol. 1. pp 141-146, these thresholds are selected automatically by the calculation of the Linear Index of Fuzziness $\gamma_1(X)$, using each grey level b, $0 \leq b \leq L$, as a cut-off value:

$$\gamma_1(X) = \frac{2}{MN} \sum_m \sum_n \left| \mu_X(x_{mn}) - \mu_{\underline{X}}(x_{mn}) \right|$$

where:

$\mu_X(x_{mn}) = 0,\ for\ x_{mn} \leq a$

or

$$\mu_X(x_{mn}) = 2\frac{(x_{mn} - a)^2}{(c - a)^2},\ for\ a \leq x_{mn} \leq b$$

or

$$\mu_X(x_{mn}) = 1 - 2\frac{(x_{mn} - c)^2}{(c - a)^2},\ for\ b \leq x_{mn} \leq c$$

or

$\mu_X(x_{mn}) = 1,\ for\ x_{mn} \geq C$

and

$\mu_{\underline{X}}(x_{mn}) = 0,\ for\ \mu_X(x_{mn}) < 0.5$

or

$\mu_{\underline{X}}(x_{mn}) = 1,\ for\ \mu_X(x_{mn}) \geq 0.5$

with

$$0 \le m < M, 0 \le n < N, \; b = \frac{a + c}{2}, \; b - a = c - b = \Delta b$$

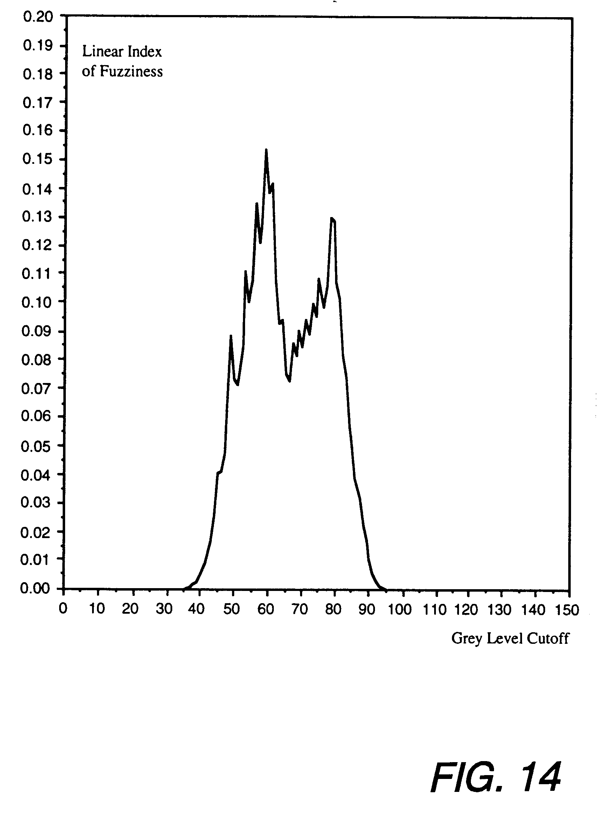

The values used by Pal et al. for the bandwidth $\Delta B$ ranged from 4 to 30 and it was found that $4 \le \Delta\beta \le 20$ was most useful. Thus there is generated a list of L values for $\gamma_1(X)$, which when plotted out against L is represented in Figure 14.

The linear index of fuzziness is a measure of the "uncertainty" of an image - the closeness of an image to a two-tone image thresholded at the cut-off level. The plot of Figure 14 has at least two discernible minima - these correspond to the boundary grey levels that separate three areas of the image - remaining background (darkest), soft tissue next to the background, and bone (brightest).

Pal suggests the use of the $G_s$ function for preliminary enhancement:

$$p_{mn} = G_s(x_{mn}) = \left[1 + \frac{(x_{max} - x_{mn})}{F_d}\right]^{F_e}$$

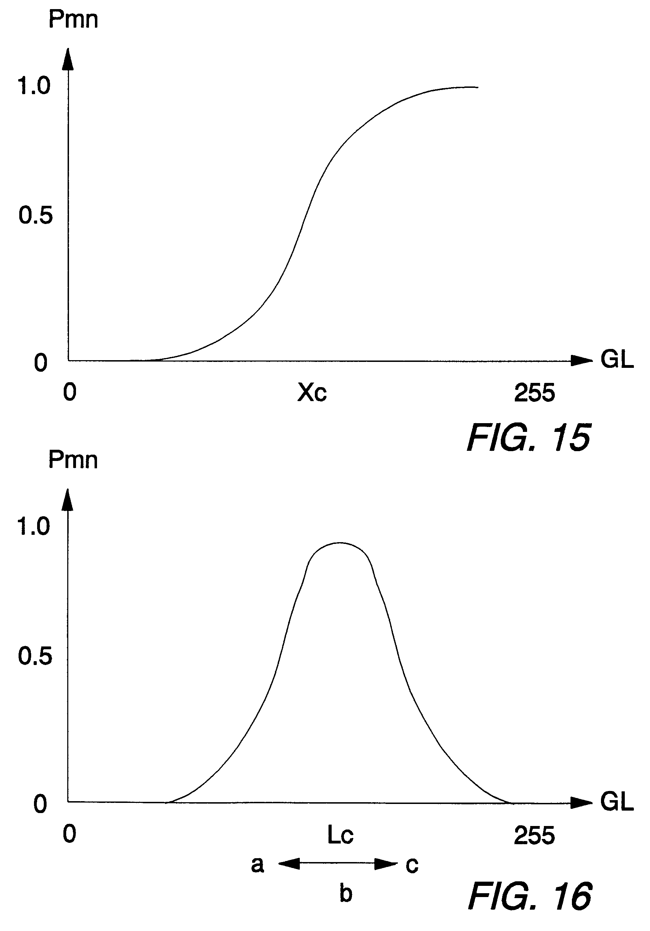

where $f_d$ and $F_e$ are denominational and exponential "fuzzifiers" respectively and $x_{max}$ is the value of the largest grey level L-1. The fuzzifiers are derived from the fact that when $x_{mn} = {}_xc$, the chosen cutoff value, $G_s(x_c) = 0.5$. Figure 15 represents the $G_s$ function against grey level.

The exponential fuzzifier is some small real number which is usually one or two, and the larger it is, the more effect it has on the enhancement. The denominational fuzzifier is calculated from $G_s(x_c) = 0.5$:

$$\frac{1}{2} = \left[1 + \frac{x_{max} - x_c}{F_d}\right]^2$$

$$F_d = \frac{x_{max} - x_c}{\frac{1}{\sqrt{2}} - 1}$$

The cut-off values are the first and second threshold levels (background and soft tissue) found by the $\gamma_1(X)$ calculation. After the property plane $p_{mn}$ has been extracted, it is enhanced by the $T_r$ operation:

$$p'_{mn} = T_r(P_{mn})$$

where

$$T_s(P_{mn}) = T_1(T_{s-1}(P_{mn}) \; S, = 0,1,2,...r$$

and

$$T_1(P_{mn}) = \left[ \begin{array}{ll} 2 P_{mn}^2 & 0 \le p_{mn} \le 0.5 \\ 1 - 2(1 - p_{mn}) & 0.5 \le p_{mn} \le 1 \end{array} \right.$$

and r is the number of times the operation is performed. The enhanced grey level plane is found by applying the inverse $G_s$ function

$$x'_{mn} = G_s^{-1}(p'_{mn}) = x_{max} - F_d\left(\sqrt[F]{p_{mn}} - 1\right)$$

Fuzzy properties are now extracted from the new image X using alternating $\pi$ and $1-\pi$ functions:

Let there be k regions, separated by k - 1 threshold levels, $l_1$, $l_2$,..., $l_{k-1}$, whose centres are $l_{c1}$, $l_{c2}$,..., $l_{c(k)}$. Then

$$P_{mn} = \begin{array}{ll} G_\pi(x_{mn}; l_2 - l_1, l_{c1}) & x_{mn} \le l_2 \\ 1 - G_\pi(x_{mn}; l_3 - l_2, l_{c3}) & l_2 \le x_{mn} \le l_3 \\ G_\pi(x_{mn}; l_4 - l_3, l_{c4}) & l_3 \le x_{mn} \le l_4 \\ \quad \dots\dots\dots \\ G_\pi(x_{mn}; l_{k-2} - l_{k-3}, l_{c(k-2)}) & l_{k-3} \le x_{mn} \le l_{k-4} \\ 1 - G_\pi(x_{mn}; l_{k-1} - l_{k-2}, l_{c(k-2)}) & x_{mn} \le l_{k-2} \end{array}$$

where

$$G_\pi(x; b, c) = S\left(x; c-b, c-\frac{b}{2}, c\right) \ for \ x \le c$$

or

$$G_\pi(x; b, c) = 1 - S\left(x; c; c+\frac{b}{2}, c+b\right) \ for \ x \ge c$$

and

$S(x; a, b, c) = 0 \ for \ x \le a$

or

$$S(x; a, b, c) = 2 \frac{(x - a)^2}{(c - a)^2} \qquad for \ a \le x \le b$$

or

$$S(x; a, b, c) = 1 - 2 \frac{(x - a)^2}{(c - a)^2} \qquad for \ b \le x \le c$$

or

$S(x; a, b, c) = 1$ *for* $x \geq c$

and

$$b = \frac{a + c}{2}$$

The $G_s$ function is represented in Figure 16 where the vertical axis represents $P_{mn}$ and the horizontal axis represents the grey scale.

The property plane thus formed is now enhanced with the $T_r$ function above, with $r = 3$ or $4$. The greater the number of iterations, the more the enhancement and the longer it takes. If the grey level plane were retrieved at this point with the inverse $G_\pi^{-1}$ function, the regions of the search rectangle would be much easier to distinguish from one another. By comparison, Pal uses the $G_s^{-1}$ function with a cut-off level equal to half the maximum grey level. This image is then processed using an edge detector:

$$x'_{mn} = \left| x'_{mn} - \max_N(x_{ij}) \right|$$

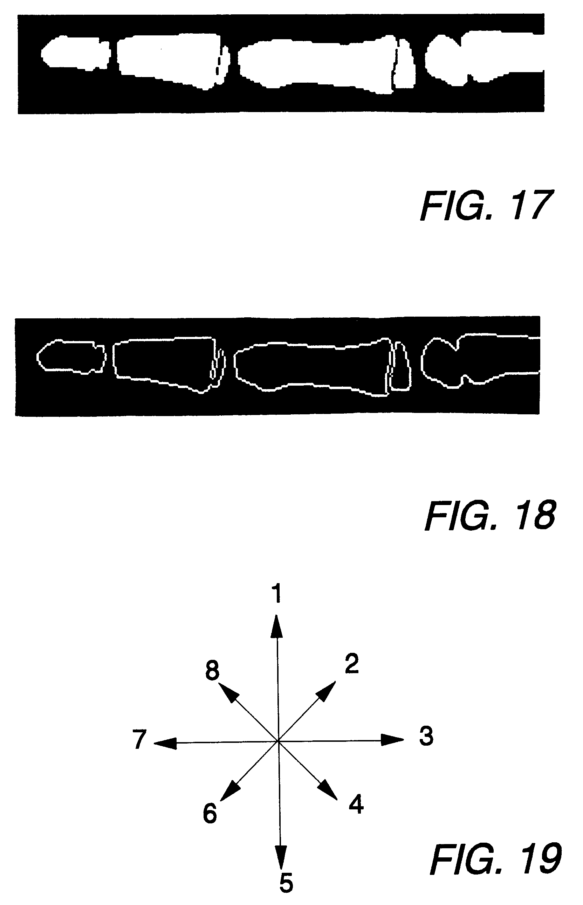

where N is a set of pixels of co-ordinates (i,j) in a circle of radius R (in this case 1) giving and image result as shown in Figure 17, which represents the fuzzy outline extraction on a finger of ca. 5 years old where no palmar/dorsal edges were found. Figure 18 illustrates the result of the "max" edge detector on the same finger.

The above technique is applied to the finger rectangles and to the radioulnar search rectangle, although a substitute algorithm is preferably used for finding the thresholds as the linear index of fuzziness takes a long time to complete on an image of any appreciable size. This technique goes though all the pixels once, and if the grey level gradient around the pixel is higher than a certain value, one is added to a value kept for the grey level of this pixel. At the end, a histogram of edge frequencies is generated that has maxima where the index of fuzziness has minima.

For following the edge of the bone images in the search rectangle, an procedure similar to that discussed above for following the edge of hand outline is used. The procedure is modified somewhat to separate outlines of bones which may overlap, by making sure that the direction from the last edge followed is recorded in the edge structure, and making sure that if more than one edge is found to follow, that the one most closely matching the previously followed one is stacked last. This means that it will be the first off the stack next time round the loop and will be followed first. The direction is recorded as a digit from 1 to 8 - an "octal chain code" as represented in Figure 19.

The direction is found by finding the signs of the differences between the x and y co-ordinates of the current pixel and the last pixel followed. Edges are found and followed by scanning from the top left of the search rectangle, left to right and down. S. A. Kwabwe et al, in an article entitled 'Recognition of Bones from X-rays of the Hand' published in 1983 in the Int. J. Syst. Sci., Vol. 16, No. 4, proposes the identification of bones from octal chain codes of portions of radiographs. The algorithm Kwabwe proposes is used in the present system on all four search rectangles, modified for the first metacarpal which is usually missing from the first finger rectangle.

Thus, at the end of the edge following process, the edges are extracted as a series of octal chain codes. These codes are stored and can then be used to classify the bones and to generate a report.

## CLASSIFICATION AND REPORT GENERATION

Given a set of identified outlines that represent bone outlines and extra surfaces bones which may aid assessment of skeletal maturity, it is then necessary to give a classification (A to H, or sometimes I) to each bone. This can be done by pattern matching with respect to a set of reference bone structures stored in the computer memory. A. Pathak et al., in an article entitled 'Syntactic Recognition of Skeletal Maturity' published in 1984 in Patt Recog Lett., Vol. 2, pp.193-197, has proposed a syntactic method of assessing the skeletal maturity of a radius. This technique described by Pathak et al. is used for the classification of the carpals, where shape recognition forms the basis of the method, and in the later maturity stages of the

18

ulna, radius and the short bones of the fingers.

Looking at the small finger bone section of J. M. Tanner et al.'s work in 'A revised System for Estimating Skeletal Maturity from Hand and Wrist Radiographs with Separate Standards for Carpals and other Bones (T. W. II system)' published in 1972 by the International Children's Centre, Paris, it can be seen that the same rules are used for all finger bones, but they may represent different maturity stages:

i)No epiphysis present.

ii)Epiphysis just discernible.

iii)Epiphysis present, less than half the width of the metaphysis.

iv)Epiphysis wider than half the width of the epiphysis.

v)Some shape change away from oval.

vi) Appearance of palmar and/or dorsal surfaces.

vii)Epiphysis caps the metaphysis.

viii)Fusion of epiphysis and metaphysis begins.

ix) Fusion of epiphysis and metaphysis is complete. Fusion line not visible over the majority of the width of the bone.

The width of the bones has already been used above in implementing Kwabwe's algorithm to identify them in the first place. Thus rules (i) to (iv) can automatically be generated with the aid of the rough guess of skeletal maturity made earlier (if no epiphysis is found and the "ballpark" bone age is very immature, rule (i) can be given, otherwise rule (ix)). If no separate epiphysis is found, the width of the next long bone up the finger all the way up its length is measured, and if its width becomes very small then fusion has begun rule (viii). The presence of extra outlines inside bones implies the presence of extra surfaces evolving rule (vi). The remaining rules, namely rules (v) and (vii), are dealt with by means of part of the syntactic shape recognition algorithm described in Pathak et al. 's article reference above. The outline of the bone is split up into sections of arc and each arc section is defined as "clockwise curve", "anticlockwise curve" or "straight line". This is done by comparing the distance between a number of points (defined as the "unit length") on the outline, and the distance actually covered by the arc section in each direction. If the outline consists only of clockwise or anticlockwise curves, then it can only be an oval type shape, and if other curves exist, rule (v) can be applied. If the pattern of arcs along the epiphysis matches the closest portion of the pattern of arcs across the metaphysis, then rule (vii) can be applied.

In the case of the maturity of the carpal bones, for the first three or four classes of maturity, J. M. Tanner et al., in 'A New System for Estimating Skeletal Maturity from the Hand and Wrist, with Standards Derived from a Study of 2600 Healthy British Children', published in 1962 by the International Children's Centre, Paris, are treated as epiphyses, their matching "metaphysis" being either the ulnar, radial or first metacarpal metaphysis, depending upon the carpal concerned. The remaining classes are generated by detection of specific relative lengths and shape changes using the shape recognition algorithm proper. Appropriate sections of carpal outline are converted into arc lengths and parsed against grammars specifically written for each bone. If the shape we are looking for is there in the outline, the appropriate grammar will give a correct parse and we can apply the TW2 class applicable.

Having classified the TW2 bones, they can now put together a report containing the outlines recognised, the TW2 classes found, and percentile graphs which plot score achieved against chronological age (if available). These graphs indicate the third, fiftieth (expected value, namely the "bone age") and ninety-seventh percentiles of Tanner's growth populations as at the aforementioned publication of J. M. Tanner from 1972. The classes are converted into scores by means of six simple look-up tables which map classes to scores (three for each sex) and the resultant scores are totalled. The three total scores are converted into bone age by means of six equations, which have been derived from the data in conversion tables set out in the aforementioned publication by J. M. Tanner from 1972.

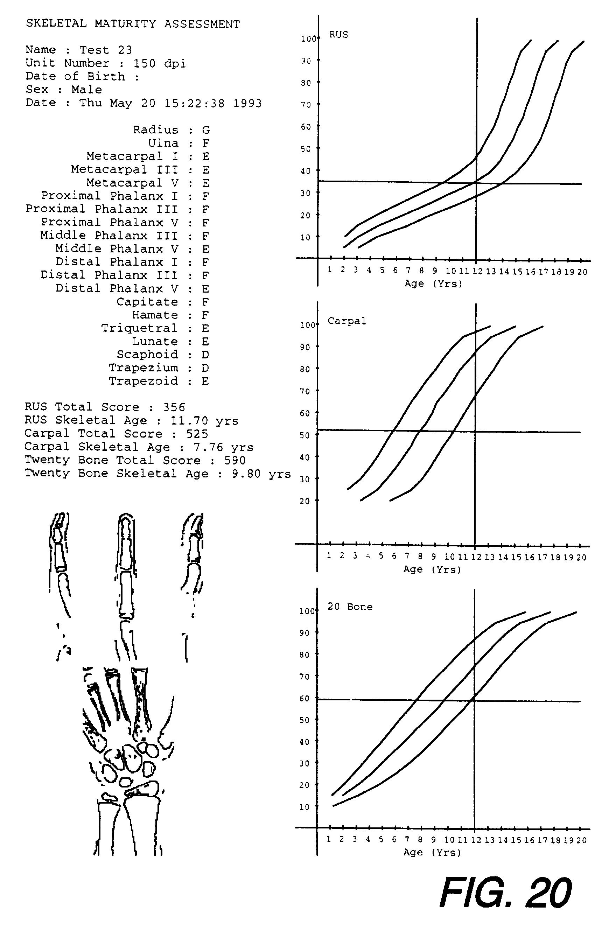

Figure 20 is a representation of a report which can be generated as the output from the image processing techniques described above.

Thus there has been described an example of an apparatus and a method for extracting, from a source image, irregular relatively distinct features from an irregular relatively less distinct object which occupies a part of the source image. A number of image processing steps are performed in which: the edge outline of the object is extracted from the source image to produce an object outline image; the object outline is traced and predetermined data points on the object outline are located; particular regions of the object are identified within the source image using the identified data points; and the relatively distinct features are extracted from the identified regions.

The invention finds particular, but not exclusive application for the assessment of skeletal maturity ('bone age' ) wherein the source image is, or is derived from a digital or digitised radiograph of a subject's hand and wrist, with the object being the hand and wrist and the feature being the bones within the hand and/or wrist. In this case, classification of bone outlines extracted from the image are compared to and classified with respect to reference sample bones to compute an assessment of skeletal maturity.

Although a particular embodiment of the invention has been described herein, it will be appreciated that many modifications and/or additions to the invention are possible.

For example, although the invention has been described in the context of the automatic computation of an assessment of skeletal maturity, it will be appreciated that the feature extraction technique disclosed herein could be used for extracting irregular features from an object where the features are embodied in an irregular object and the features cannot be extracted, for example, by conventional pattern matching or thresholding techniques.

In the preferred embodiment, the invention is implemented by programming a hardware configuration such as is illustrated in Figures 1A and 1B. However, it will be appreciated that other hardware configurations are possible. For example, the computer used could be a host computer, or could be formed from a network of processors. Also, although in the preferred embodiment the invention is implemented by programming a general purpose computer, it will be appreciated that at least some of the functions of the invention could be implemented by means of special purpose hardware.

## Claims

1. An image processing system for extracting, from a source image comprising an array of pixels, irregular relatively distinct features from an irregular relatively less distinct object which occupies a part of the source image, the system comprising:
   - object outline extracting means (S1, S2) for extracting the edge outline of the object in the source image to produce an object outline image;
   - data point locating means (S3) for tracing the extracted object outline and for locating predetermined data points on the object outline;
   - region identification means (S4) responsive to the located data points to identify particular regions of the object within the source image; and
   - feature identification means (S5) responsive to image data relating to the source image within the identified regions for extracting the relatively distinct features therefrom.

2. A system according to claim 1 wherein the object outline extracting means comprises:
   - object outline emphasising means (S2) including a difference function generator for replacing each pixel value in the image by a pixel value determined as a function of the difference in grey scale of pixels in a predetermined area centred on the pixel in question to produce an outline emphasised image; and
   - thresholding means (S2) for extracting, as the object outline, pixels from the outline emphasised image which exceed a predetermined threshold.

3. A system according to claim 2 wherein the thresholding means (S2) recursively determines a threshold on the basis of a cumulative distribution of grey scale levels in the outline emphasised image until a continuous outline has been extracted.

4. A system according to claim 2 or claim 3 wherein the object outline emphasising means also comprises a filter (S1) for reducing the noise in the source image before processing by the difference function generator.

5. A system according to any one of claims 2 to 4 wherein the object outline extracting means (S1, S2) removes any object pixels forming a part of the object outline which part has a perimeter greater than the distance between its extremities by an amount outside a predetermined range.

6. A system according to any one of the preceding claims wherein the data point locating means (S3) comprises:
   - means for determining the orientation of the object within the image and initial data points by identifying predetermined object structures within the image; and
   - means for selecting further data points corresponding to predetermined directions or changes in direction of the object outline.

7. A system according to any one of the preceding claims wherein the region identification means (S4) comprises sub-image defining means responsive to the data point locating means define a sub-image identified by respective data points by extracting pixels from or derived from the source image and, where necessary, rotating the pixels to correspond to a predetermined sub-image orientation, and wherein the feature identification means identifies the outlines of individual features within a sub-image.

8. A system according to any one of the preceding claims wherein the feature identification means (S5) comprises:
   - means for emphasising the feature outlines; and
   - means for following the feature outlines to encode the shape of the outlines.

9. A system according to any one of the preceding claims additionally comprising feature classifying means (28) which compares the features identified by the feature identification means to predetermined reference features to classify the identified features and report generating means for outputting a report on the result of the classification of predetermined identified features from the source image.

10. A system according to any one of the preceding claims wherein the source image is, or is derived from a digital radiographic image of a part of a limb of a subject wherein the object is part of the limb and the features are the bones within the limb.

11. A system according to claim 10 wherein the part of a limb includes a hand of a subject.

12. A system according to claim 11 wherein the data point locating means (S3) comprises means for tracing fields, e.g. circles, of differing sizes, e.g. diameters, on the object outline image and for determining data points representative of the wrist or forearm, as start and finish points for subsequently tracing the object outline, in response to the detection of a predetermined pixel value pattern or patterns.

13. A system according to claim 11 or claim 12 when dependent on claim 7 wherein the feature identification means (S5) comprises means for assessing the relative widths of the relatively distinct areas in the wrist portion of source image, or of an image derived therefrom, to determine the handedness of the image, and, where necessary, to invert the pixels of the sub-images to correspond to a hand of a particular handedness.

14. A system according to any one of claims 10 to 13 when dependent on claim 9 wherein the report generated is an assessment of skeletal maturity.

15. A system according to claim 14 wherein the feature classifying means (28) comprises rough age assessment means for scanning pixels within an identified image region to identify predetermined pixel value changes indicative of immature bone development whereby a rough age assessment is computed for distinguishing different cases relevant to the generation of the report on skeletal maturity.

16. A system according to any one of the preceding claims comprising means (24) for generating the source image from an initial image by adjusting the spread of pixel values of the initial image to utilise substantially the full range of pixel values available for the source image.

17. A method for processing an image to extract, from a source image comprising an array of pixels, irregular relatively distinct features from an irregular relatively less distinct object which occupies a part of the source image, the method comprising:
   a) extracting an edge outline of the object in the source image to produce an object outline image;
   b) tracing the extracted object outline and locating predetermined data points on the object outline;
   c) responding to the located data points to identify particular regions of the object within the source image; and
   d) responding to image data relating to the source image within the identified regions for extracting the relatively distinct features therefrom.

10

12

SCANNER

PRINTER

14

16

## FIG. 1A

14

16

12D

12II

12OI

12DI

12B

12UI

12DM

12PM

12P

## FIG. 1B

IMAGE GENERATOR

22

IMAGE PREPROCESSOR

24

BONE OUTLINE EXTRACTOR

26

BONE OUTLINE CLASSIFIER
AND REPORT GENERATOR

28

*FIG. 2*

*FIG. 3*

*FIG. 4*

24

S1 | MEAN FILTER PROCESSING |

S2 | HAND OUTLINE EXTRACTION |

S3 | OUTLINE TRACING |

S4 | IMAGE SUB-DIVISION |

S5 | BONE RECOGNITION |

*FIG. 5*

FIG. 6

FIG. 7A

FIG. 7

FIG. 8

FIG. 11

FIG. 9

FIG. 10

GL

*FIG. 12*

$$X = \begin{bmatrix} (x_{1,1},p_{1,1})(x_{1,2},p_{1,2}) \text{-------------} (x_{1,M-1},p_{1,M-1})(x_{1,M},p_{1,M}) \\ (x_{2,1},p_{2,1})(x_{2,2},p_{2,2}) \text{-------------} (x_{2,M-1},p_{2,M-1})(x_{2,M},p_{2,M}) \\ (x_{3,1},p_{3,1})(x_{3,2},p_{3,2}) \text{-------------} (x_{2,M-1},p_{3,M-1})(x_{3,M},p_{3,M}) \\ \vdots \\ (x_{N-1,1},p_{N-1,1})(x_{N-1,2},p_{N-1,2}) \text{--------} (x_{N-1,M-1},p_{N-1,M-1})(x_{N-1,M},p_{N-1,M}) \\ (x_{N,1},p_{N,1})(x_{N,2},p_{N,2}) \text{-----------} (x_{N,M-1},p_{N,M-1})(x_{N,M},p_{N,M}) \end{bmatrix}$$

*FIG. 13*

FIG. 14

*FIG. 15*

*FIG. 16*

*FIG. 17*

*FIG. 18*

*FIG. 19*

SKELETAL MATURITY ASSESSMENT

Name : Test 23
Unit Number : 150 dpi
Date of Birth :
Sex : Male
Date : Thu May 20 15:22:38 1993

```
              Radius : G
                Ulna : F
         Metacarpal I : E
       Metacarpal III : E
         Metacarpal V : E
   Proximal Phalanx I : F
 Proximal Phalanx III : F
   Proximal Phalanx V : F
     Middle Phalanx III : F
     Middle Phalanx V : E
      Distal Phalanx I : F
    Distal Phalanx III : F
      Distal Phalanx V : E
              Capitate : F
               Hamate : F
            Triquetral : E
               Lunate : E
              Scaphoid : D
             Trapezium : D
             Trapezoid : E
```

RUS Total Score : 356
RUS Skeletal Age : 11.70 yrs
Carpal Total Score : 525
Carpal Skeletal Age : 7.76 yrs
Twenty Bone Total Score : 590
Twenty Bone Skeletal Age : 9.80 yrs

*FIG. 20*

33